(19)

Europäisches
Patentamt
European
Patent Office
Office européen
des brevets

(11) **EP 2 442 426 A2**

(12) **EUROPEAN PATENT APPLICATION**
published in accordance with Art. 153(4) EPC

(43) Date of publication:
**18.04.2012 Bulletin 2012/16**

(21) Application number: **10785774.0**

(22) Date of filing: **02.06.2010**

(51) Int Cl.:
***H02J 7/00*** *(2006.01)*

(86) International application number:
**PCT/ES2010/000252**

(87) International publication number:
**WO 2010/142821 (16.12.2010 Gazette 2010/50)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **08.06.2009 ES 200901429**

(71) Applicant: **Konjevic, Bozidar
46900 Calicanto-Torrente (ES)**

(72) Inventor: **Konjevic, Bozidar
46900 Calicanto-Torrente (ES)**

(74) Representative: **Jordá Petersen, Santiago
CURELL SUÑOL S.L.P.
Passeig de Gracia, 65 bis
08008 Barcelona (ES)**

(54) **GENERATION OF ELECTRICAL ENERGY BY MEANS OF BI-DIRECTIONAL SERIES RESONANCE**

(57) **Abstract:** A converter (K) is connected to the battery (V1), the outlet of said converter supplying a variable continuous voltage (VK) that, in series with the battery, regulates the intensity of the impulses (I1) of the current circulating, during each first half-cycle of the resonance frequency, through the electronic switch (S1), the coil (L) and the capacitor (C), the electronic switch (S2) connecting during every second half cycle, and the capacitor and the coil discharging to the battery. A current (I2) that has the same magnitude and form as the current (I1) circulates in the opposite direction in such a way that the amount of energy supplied by the capacitor and the coil to the battery is higher than the supply by the latter in the first half of the cycle, in such a way that the resulting difference in energy can be used to carry out a task, connecting a load to the battery.

**Resumen:** A la batería (V1) se conecta un convertidor (K), cuya salida proporciona una tensión continua variable (VK) que, en serie con la batería, regula la intensidad de los impulsos de corriente (I1) que circula, durante cada primer medio ciclo de la frecuencia de resonancia, a través

FIG.1

## Description

Object of the Invention

The present invention relates to the generation of electrical energy by means of bi-directional series resonance which allows recovering the energy accumulated in the coil and in the capacitor of a resonant circuit in series without the resonance deteriorating, powered during each first half-cycle by an electric battery, a voltage being produced in the capacitor which is discharged during each second half-cycle through the coil to the battery, a current having the same magnitude and form as that of the first half-cycle circulating through the coil in the opposite direction, so energy is stored in the coil which recharges the battery when it is discharged.

More specifically, the energy supplied by the battery during a half-cycle is equal to the product of the voltage of the battery, the mean current and the time of duration of the half-cycle, whereas during the second half-cycle the energy recovered from the capacitor which recharges the battery is proportional to the square of the value of the maximum voltage thereof, and the energy recovered from the coil and returned to the battery is proportional to the square of the peak value of the current circulating through it, so the sum of the energies stored in the capacitor and the coil is greater than the amount of energy supplied by the battery, obtaining a gain which allows: returning the energy yielded by the battery in each first half-cycle, covering the losses and having energy available to carry out a task.

Background of the Invention

When an electric current circulates at resonance frequency in a circuit formed by a coil and a capacitor connected in series, the inductive and capacitive reactances are 180° out-of-phase and cancel each other out, such that the circuit acts like a short-circuit, so said current is limited only by the ohmic resistance of the circuit, high also 180° out-of-phase voltages being produced in the coil and in the capacitor, there being in the coil an energy the value of which is proportional to the square of the peak value of the current circulating therethrough, and there being in the capacitor an energy proportional to the square of the maximum value of its voltage.

The resonant circuit in series is essentially used in radio and television circuits to tune electromagnetic waves of certain frequencies and in power electronics in alternating current filters to attenuate voltage harmonics.

Systems which allow recovering energy from the coil and from the capacitor of a resonant circuit in series and to thus obtain an energy gain to cover the characteristic losses of the circuit and to have additional energy available to carry out a task are not known in the current state of the art.

Description of the Invention

The invention relates to a resonant circuit in series connected to an electric battery from which, during a half-cycle, a device acting like an electronic switch allows the circulation of impulses of electric current at the resonance frequency, an energy proportional to the square of the maximum voltage thereof being stored in the capacitor, while during the other half-cycle, a second electronic switch allows the circulation of impulses of current in the opposite direction, which occurs as a consequence of the discharge of the capacitor and which recharges the battery through the coil, an energy proportional to the square of the peak current circulating therethrough and discharged through the battery being produced in the coil, recharging it, producing a maximum negative voltage in the capacitor.

As a consequence of the discharge of the capacitor, a current circulates during the second half-cycle, producing in the coil a 180° out-of-phase voltage with respect to the voltage existing therein and produced during the first half-cycle when the current of the battery charges the capacitor.

To obtain the maximum energy, it is necessary for the charging and discharging of the capacitor and the coil to occur in sinusoidal steady state, where the sum of the energies stored in the capacitor and the coil is greater than the amount of energy supplied by the battery, which is equal to the product of its voltage, the mean current and the time of duration of the half-cycle, so energy is available that is useful to carry out a task.

Description of the Drawings

To complement the description that is being made and for the purpose of aiding to better understand the features of the invention according to practical preferred embodiments thereof, a set of drawings is attached as an integral part of said description in which the following has been depicted with an illustrative and non-limiting character:

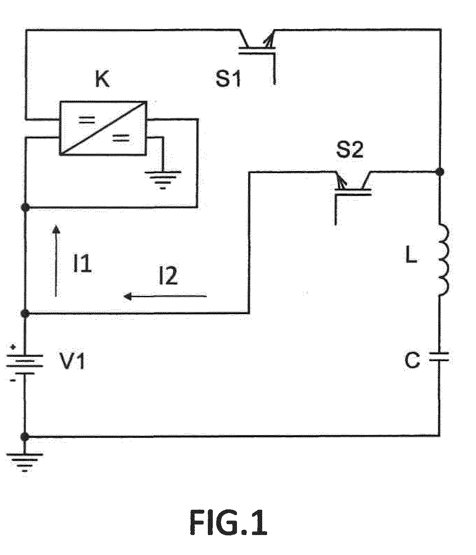

Figure 1 shows a practical circuit in which a converter powered by a battery supplies a variable direct voltage that, in series with the battery, regulates the intensity of the impulses of the resonant current which, through an electronic switch and a coil, charges a capacitor and then, through another electronic switch and a coil, is discharged to the battery, which recovers the yielded energy and has energy available to carry out a task.

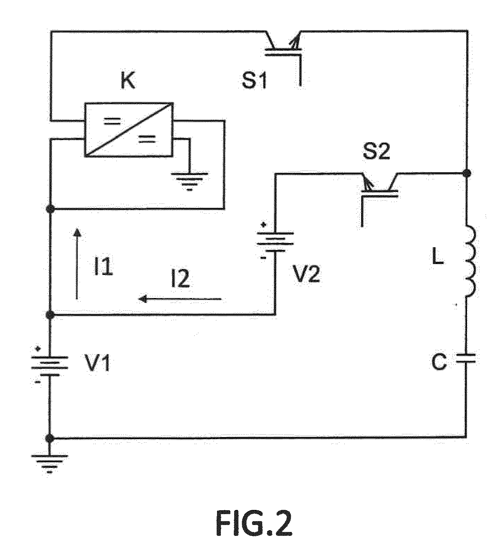

Figure 2 shows a practical circuit in which a converter powered by a battery supplies a variable direct voltage that, in series with the battery, regulates the intensity of the impulses of the resonant current which, through an electronic switch and a coil, charges a capacitor and then is discharged through another electronic switch, a coil and a second battery so both batteries are recharged, such that the energy accumulated in the second battery can be used to carry out a task.

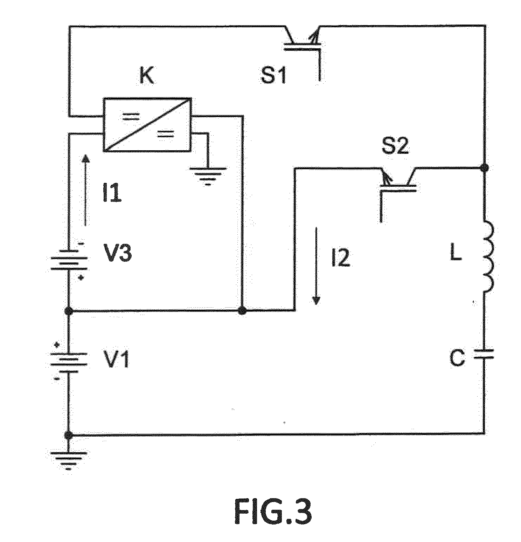

Figure 3 shows a practical circuit in which a converter powered by a first battery supplies a variable direct voltage that, in series with the battery, regulates the intensity of the impulses of the resonant current which, through an electronic switch and a coil, charges a second battery and a capacitor, the latter then discharging through another electronic switch and the coil, recharging the first battery, the energy accumulated in the second battery being used to carry out a task.

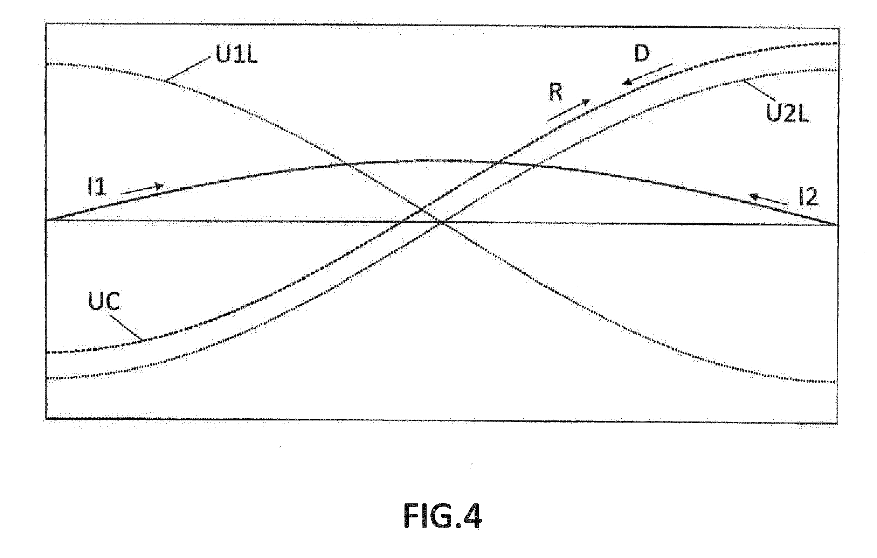

Figure 4 shows the waveforms which are obtained with the practical embodiment of the three figures described above, in which the current circulating from the battery during the first half-cycle, the voltage of the capacitor and the reverse current circulating during the second half-cycle as a consequence of the discharge of the capacitor, as well as the voltages in the coil, are depicted.

Preferred embodiment of the Invention

In the preferred embodiment shown in Figure 1, a converter (K) is connected to a battery (V1), the outlet of said converter supplying a variable direct voltage (VK) that, in series with the voltage of the battery (V1), regulates the intensity of the impulses (I1) of current circulating during each first half-cycle from the battery (V1) through the electronic switch (S1), the coil (L) and the capacitor (C), the value of the energy supplied by the battery (V1) being equal to:

$$W_{v1} = U \cdot I \cdot T/2 \quad [Ws]$$

where U is the voltage of the battery (V1) expressed in volts, I is the mean current expressed in ampere and T is the period expressed in seconds, there being at the end of the first half-cycle (T/2) energy stored in the capacitor (C) equal to:

$$W_c = C \cdot u^2/2 \quad [Ws]$$

C expressing the capacity of the capacitor in farads and u the maximum value of the sinusoidal voltage of the capacitor in volts.

At the end of the first half-cycle the electronic switch (S1) is disconnected and during the second half-cycle the switch (S2) is connected, through which switch the energy of the capacitor (C) and of the coil (L) is discharged to the battery (V1), the energy stored in the coil (L) being:

$$W_L = L \cdot i^2/2 \quad [Ws]$$

where L is the inductance of the coil expressed in henries, i is the peak value of the sinusoidal current expressed in ampere, circulating as a consequence of the discharge of the capacitor (C) and of the coil (L).

The sum of the energies returned by the capacitor (C) and the coil (L) to the battery (V1) during the second half-cycle is greater than the amount of energy supplied thereby in the first half of the cycle, such that the resulting difference in energy can be used to carry out a task, connecting a load to the battery (V1).

Unlike what has been described above in the example of Figure 1, in the second practical embodiment shown in Figure 2 the capacitor (C) and coil (L) discharge to the battery (V1) during the second half-cycle through a second battery (V2), such that the current (I2) enters through the positive terminal of both batteries, recharging them, so the battery (V1) recovers the amount of energy supplied during the first half-cycle, whereas the energy accumulated by the battery (V2) is used to carry out a task.

In the another practical embodiment depicted in Figure 3, and unlike the preceding embodiments, a second battery (V2) is connected in series with the battery (V1) and in a reverse manner, such that the current (I1) circulating from the battery (V1) enters through the positive terminal of the battery (V2), recharging it with energy that can be used to carry out a task, whereas during the second half-cycle the discharge of the capacitor (C) and of the coil (L) recharge the battery (V1).

For greater understanding of the practical embodiments, Figure 4 graphically shows the voltages and currents obtained therein once the sinusoidal steady state has been reached, noting that during each first half-cycle, when the electronic switch (S1) is connected the current (I1) circulates from the battery (V1) in the direction indicated by the arrow (R), charging the capacitor (C), connecting during each second half-cycle the electronic switch (S2) through which the current (I2) produced as a consequence of the discharge of the capacitor (C) circulates in the opposite direction with respect to the current (I1) as indicated by the arrow (D).

The current (I2) circulating as a consequence of the discharge of the capacitor (C) produces in the coil (L) a 180° out-of-phase voltage (U2L) with respect to the voltage (U1L), so both voltages are neutralized during the discharge of the capacitor (C).

The charging and discharging currents of the capacitor (C) and of the coil (L) in the resonant circuit are limited only by the ohmic resistance, so the latter has to have a very low value.

In view of this description and set of drawings, the person skilled in the art will understand that the embodiments of the invention which have been described can be combined in many ways within the object of the invention. The invention has been described according to several preferred embodiments thereof, but it will be evident for the person skilled in the art that multiple variations can be introduced in said preferred embodiments without departing from the object of the claimed invention.

**Claims**

1. Generation of electrical energy by means of bi-directional series resonance, **characterized in that** it comprises a resonant circuit formed by a coil (L) and a capacitor (C) connected in series and powered by an electric battery (V1), from where a current (I1) circulates during a half-cycle of the resonance frequency through the electronic switch (S1), a voltage (UC) being produced at the end of that half-cycle in the capacitor (C) which is discharged through the coil (L) and the electronic switch (S2) during the following half-cycle, a current (I2) that has the same magnitude and form as the current (I1) and recharges the battery (V1) circulating in the opposite direction.

2. Generation of electrical energy by means of bi-directional series resonance according to claim 1, **characterized in that** a voltage converter (K) is connected to the battery (V1), which converter supplies at the outlet thereof and in series with the battery (V1) a variable direct voltage (VK), on the value of which the intensity of the current (I1) circulating through the resonant circuit during the half-cycle depends, this variable voltage (VK) depending on the current consumed by the load when a task is carried out.

3. Generation of electrical energy by means of bi-directional series resonance according to claims 1 and 2, **characterized in that** the energy stored in the capacitor (C) at the end of each first half-cycle and supplied to the battery (V1) during each second half-cycle is proportional to the square of the maximum voltage therein, whereas the energy stored in the coil (L) during each second half-cycle and supplied to the battery (V1) is proportional to the square of the peak value of the current circulating therethrough, the sum of the energies stored in the capacitor (C) and the coil (L) being greater than the amount of energy supplied by the battery (V1), which is equal to the product of its voltage times the mean current circulating therefrom during a half-cycle and for the time of duration thereof, so with the resulting difference in energy, the battery (V1) recovers the amount of energy supplied, the characteristic losses of the circuit are covered and energy is available that is useful to carry out a task.

4. Generation of electrical energy by means of bi-directional series resonance according to the preceding claims, **characterized in that** during each second half-cycle, a second battery (V2) is connected in series with the battery (V1), the current (I2) entering through the positive terminals of both batteries circulating as a consequence of the discharge of the capacitor (C) and the coil (L), recharging them, so the battery (V1) recovers the amount of energy supplied, the characteristic losses of the circuit are covered and the energy accumulated in the battery (V2) is used to carry out a task.

5. Generation of electrical energy by means of bi-directional series resonance according to the preceding claims, **characterized in that** a battery (V3) is connected in series with the battery (V1) and in a reverse manner, so the electric current (I1) circulating from the battery (V1) during each first half-cycle enters through the positive terminal of the battery (V3) recharging it, this energy being used to carry out a task, noting that the discharge of the capacitor (C) and of the coil (L) during each second half-cycle occurs through the battery (V1) which recovers the energy previously supplied.

6. Generation of electrical energy by means of bi-directional series resonance according to the preceding claims, **characterized in that** the current (I1) circulating from the battery (V1) through the resonant circuit during each first half-cycle produces a voltage (UC) in the capacitor (C) and a voltage (U1L) in the coil (L), both voltages being 180° out-of-phase, whereas during the discharge of the capacitor (C) each second half-cycle, the current (I2) producing a 180° out-of-phase voltage (U2L) in the coil (L) with respect to the voltage (U1L) circulates so during each second half-cycle, both voltages cancel each other out such that the capacitor (C) and the coil (L) are discharged to the battery (V1) without the resonance conditions deteriorating.

7. Generation of electrical energy by means of bi-directional series resonance according to the preceding claims, **characterized in that** the maximum energy stored in the resonant circuit is obtained in sinusoidal steady state when the voltage in the capacitor (C) and the current in the coil (L) are maximum.

FIG.1

FIG.2

FIG.3

FIG.4

EP 2 442 426 A2